Europäisches Patentamt

European Patent Office

Office européen des brevets

(19)

(11) Numéro de publication: **0 225 252 B1**

(12) **FASCICULE DE BREVET EUROPEEN**

(45) Date de publication du fascicule du brevet:
06.09.89

(21) Numéro de dépôt: 86402586.1

(22) Date de dépôt: 21.11.86

(51) Int. Cl.⁴: **C04B 30/02, C04B 28/24, C04B 41/50 // (C04B28/24, 22:08)**

(54) Procédé de fabrication d'un matériau composite céramique-céramique.

(30) Priorité: 21.11.85 FR 8517488

(43) Date de publication de la demande:
10.06.87 Bulletin 87/24

(45) Mention de la délivrance du brevet:
06.09.89 Bulletin 89/36

(84) Etats contractants désignés:
DE GB IT

(56) Documents cités:
EP-A- 0 004 385
US-A- 2 829 060
US-A- 4 552 804

(73) Titulaire: AUTOMOBILES PEUGEOT, 75, avenue de la Grande Armée, F-75116 Paris(FR)
Titulaire: AUTOMOBILES CITROEN, 62 Boulevard Victor-Hugo, F-92200 Neuilly-sur-Seine(FR)

(72) Inventeur: Rouaux, Yves, 3, allée de Champagne, F-78170 La Celle St Cloud(FR)

(74) Mandataire: Boivin, Claude, 9, rue Edouard-Charton, F-78000 Versailles(FR)

## Description

La présente invention a pour objet la fabrication d'un matériau composite céramique-céramique destiné à servir d'isolant thermique et comportant une matrice en silice et un renfort, par exemple en fibres d'alumine ou de silice en wiskers (fibres monocristallines de 1 à 10 μm de diamètre et de 200 à 300 μm de longueur) de nitrure de silicium ou en fibres de carbure de silicium.

Généralement on obtient un tel matériau par imprégnation d'une préforme par une matrice en silice vitreuse.

La préforme se compose de fibres compactées, de préférence de fibres d'alumine ($Al_2O_3$) ou d'alumine-silice, pouvant être liées avec quelques pourcents, environ 3 à 4 pourcents, de silice ($Si O_2$), d'autres constituants figurant à l'état de traces. La préforme présente une porosité initiale de 80 à 90% ainsi les fibres d'alumine occupent 10 à 20% du volume de la préforme.

Après imprégnation par la matrice, le matériau composite présente en général une porosité résiduelle de 15%; ainsi la matrice occupe environ 70% du volume du matériau composite.

Plusieurs procédés d'imprégnation de la préforme ont déjà été proposés.

Un premier procédé d'imprégnation connu consiste à envoyer sur la préforme des composés gazeux à l'état de vapeur qui, en agissant sur les conditions de température et de pression, réagiront pour former le composé final qui par condensation dans les pores de la préforme donnera un dépôt solide.

Un deuxième procédé d'imprégnation consiste à faire pénétrer une barbotine dans les pores de la préforme. Cette barbotine se compose d'une suspension de fines particules d'alumine ou de silice dans un liquide préférentiellement de l'eau. En éliminant l'eau par étuvage on obtient un dépôt de particules solides dans les pores de la préforme.

On peut en particulier imprégner la préforme par une solution aqueuse de silice colloïdale contenant par exemple de 30 à 40% en masse de silice. Un procédé de ce genre est décrit notamment dans les documents US-A-4,430,369, FR-A-1.471.972 ou EP-A-0 004 385, ce deuxième document décrit un procédé dans lequel une préforme en matière fibreuse est imprégnée de silice colloïdale contenant de 15 à 40% en poids de silice, dans le but d'obtenir une imprégnation à faible concentration avec un maximum de porosité.

Après imprégnation en phase liquide et dépôt de particules, on procède généralement à un frittage afin de lier entre eux et à la préforme les grains déposés par imprégnation. Le cycle doit jusqu'à présent être répété un grand nombre de fois pour atteindre une porosité résiduelle de 15%.

La présente invention a pour objet un procédé de fabrication du matériau composite défini ci-dessus, qui permet de réduire le nombre de cycles nécessaires et d'obtenir un matériau à faible porosité résiduelle en un seul cycle d'imprégnation et de frittage.

Le procédé selon l'invention, dans lequel on imprègne une préforme fibreuse par une solution aqueuse de silice colloïdale, est caractérisé en ce qu'on règle la température, le pH et la concentration de la solution de silice de façon à obtenir un gel de concentration élevée telle qu'une seule opération d'imprégnation suivie d'une opération d'étuvage suffise pour occuper 70% du volume du matériau composite.

Une solution aqueuse de silice colloïdale comporte, en suspension dans l'eau, des molécules de silanols (Si OH) et de siloxanes (Si O), les molécules d'eau étant libres ou liées aux silanols par liaison hydrogène.

En favorisant les liaisons hydrogènes on peut provoquer des liaisons siloxanes (Si O Si) avec élimination d'eau, de sorte que les particules se lient entre elles pour former un réseau rigide. On obtient ce résultat en faisant varier les charges des particules par variation du pH.

Initialement les particules sont chargées négativement, on utilise l'ammonium (NH$_4^+$) en tant que stabilisateur et la solution admet un pH de 9 environ. En introduisant quelques gouttes d'acide nitrique on porte le pH de la solution à une valeur inférieure à 1 (par exemple voisine de 0,7). Dans ces conditions, la formation de gel dure environ trois heures à une température de 60°C et s'accompagne d'une variation de masse d'environ 50%.

Ainsi l'analyse des conditions de gélification de la solution en fonction de la température, de la concentration et du pH permet, en tenant compte du temps de gélification, d'imprégner la préforme par une solution à concentration optimale conduisant après gélification à un gel à concentration élevée.

L'imprégnation de la préforme par la solution colloïdale peut se faire de diverses manières connues, dont on peut citer par exemple :
- l'imprégnation sous vide : la préforme et la solution colloïdale sont disposées dans une enceinte et, en faisant le vide, on extrait l'air inclus dans les pores de la préforme, qui est ensuite trempée dans la solution.
- l'imprégnation par pression : la préforme est disposée de manière étanche dans un circuit et la solution colloïdale traverse la préforme, soit par gravité, soit sous l'effet d'une pression qui impose l'écoulement.
- l'imprégnation par aspiration : la solution colloïdale traverse la préforme disposée de manière étanche dans un circuit. La circulation du liquide est imposée par aspiration.

En étudiant le processus de gélification, on s'aperçoit que celle-ci s'accompagne d'une évaporation d'eau et se développe à l'extérieur, au contact de l'air, vers l'intérieur. La déshydratation nécessaire à la formation du gel produit un accroissement de la concentration en surface, entraînant un pompage de la solution vers les couches de gel déjà formées au contact de l'air. Le pompage provoque des zones non imprégnées au coeur du matériau.

La préforme peut être maintenue immergée dans la solution pendant le processus de gélification de sorte que le pompage se fait au détriment de la solution. On obtient ainsi un matériau admettant une porosité finale homogène.

Le procédé selon l'invention, dans un mode de réalisation particulier, comporte les étapes suivantes :
- la préparation d'une préforme par compactage de fibres, de préférence de fibres d'alumine liées par 3 à 4% de silice de manière à obtenir une préforme de porosité initiale de 80 à 90%.
- la préparation d'une solution colloïdale à 30 à 40% en masse de silice, contenant des ions stabilisateurs de préférence d'ammonium.
- l'imprégnation de la préforme par la solution colloïdale soit par imprégnation sous vide, soit par imprégnation par pression, soit par imprégnation par aspiration, soit par tout autre procédé équivalent.
- une action sur les conditions de température et de pH pour créer les conditions d'une gélification à haute concentration tout en maintenant la préforme dans le bain colloïdal, de préférence en introduisant dans la solution de l'acide nitrique de manière à atteindre un pH inférieur à 1 (voisin de 0,7) en portant la température aux environs de 60°C.
- la déshydratation en étuve de la préforme imprégnée par le gel.
- et le frittage, de préférence en deux étapes (1h à 600°C et 1h à 900°C).

## Revendications

1. Procédé de fabrication d'un matériau composite céramique-céramique dans lequel on imprègne une préforme fibreuse par une solution aqueuse de silice colloïdale, caractérisé en ce qu'on porte le pH de la solution de silice à une valeur inférieure à 1 et qu'on règle la température et la concentration de cette solution de silice de façon à obtenir un gel de concentration élevée telle qu'une seule opération d'imprégnation suivie d'une opération d'étuvage suffise pour occuper 70% du volume du matériau composite.

2. Procédé selon la revendication 1, caractérisé en ce que la température est portée à une valeur de l'ordre de 60°C.

3. Procédé selon la revendication 2, caractérisé en ce que le pH est porté à une valeur voisine de 0,7.

4. Procédé selon la revendication 2 ou 3, caractérisé en ce que le pH est obtenu par addition d'acide nitrique.

5. Procédé selon l'une des revendications 1 à 4, caractérisé en ce qu'on maintient la préforme immergée dans la solution colloïdale pendant toute la durée de la gélification.

6. Procédé selon la revendication 1, caractérisé en ce qu'il comporte les étapes suivantes:
- la préparation d'une préforme par compactage de fibres, de préférence de fibres d'alumine liées par 3 à 4% de silice de manière à obtenir une préforme de porosité initiale de 80 à 90%.
- la préparation d'une solution colloïdale à 30 à 40% en masse de silice, contenant des ions stabilisateurs de préférence d'ammonium.
- l'imprégnation de la préforme par la solution colloïdale soit par imprégnation sous vide, soit par imprégnation par pression, soit par imprégnation par aspiration, soit par tout autre procédé équivalent.
- une action sur les conditions de température et de pH pour créer les conditions d'une gélification à haute concentration tout en maintenant la préforme dans le bain colloïdal, de préférence en introduisant dans la solution de l'acide nitrique, de manière à atteindre un pH inférieur à 1 (voisin de 0,7) en portant la température aux environs de 60°C.
- la déshydratation en étuve de la préforme imprégnée par le gel.
- et le frittage, de préférence en deux étapes (1h à 600°C et 1h à 900°C).

## Patentansprüche

1. Verfahren zur Herstellung eines Keramik-Keramik-Verbundmaterials, bei dem man einen Vorformling aus Fasermaterial mit einer wässrigen Lösung von kolloidaler Kieselsäure tränkt, dadurch gekennzeichnet, daß man den pH-Wert der Kieselsäurelösung auf einen Wert unterhalb von 1 bringt und die Temperatur und die Konzentration dieser Kieselsäurelösung derart regelt, daß ein Gel erhöhter Konzentration erhalten wird, so daß ein einziger Tränkungsvorgang, gefolgt von einem Trocknungsvorgang, ausreicht, um 70% des Volumens des Verbundmaterials auszufüllen.

2. Verfahren nach Anspruch 1, dadurch gekennzeichnet, daß die Temperatur auf einen Wert in der Größenordnung von 60°C gebracht wird.

3. Verfahren nach Anspruch 2, dadurch gekennzeichnet, daß der pH-Wert auf einen Wert in der Umgebung von 0,7 gebracht wird.

4. Verfahren nach Anspruch 2 oder 3, dadurch gekennzeichnet, daß der pH-Wert durch Hinzufügen von Salpetersäure erhalten wird.

5. Verfahren nach einen der Ansprüche 1 bis 4, dadurch gekennzeichnet, daß man den Vorformling während der gesamten Dauer der Gelbildung in die kolloidale Lösung eingetaucht festhält.

6. Verfahren nach Anspruch 1, dadurch gekennzeichnet, daß es folgende Verfahrensschritte aufweist:
- Herstellung eines Vorformlings durch Verdichtung von Fasern, vorzugsweise Aluminiumfasern, die durch 3 bis 4% Kieselsäure gebunden sind, um einen Vorformling mit einer Anfangsporosität von 80 bis 90% zu erhalten;
- Herstellung einer kolloidalen Lösung von 30 bis 40% in der Masse an Kieselsäure, die Stabilisatorionen, vorzugsweise Aluminiumionen, enthält;
- Tränkung des Vorformlings mit der kolloidalen Lösung entweder durch Tränkung unter Vakuum, oder durch Tränkung unter Druck, oder durch Tränkung durch Einsaugung, oder durch jedes andere äquivalente Verfahren;
- Einwirkung auf die Bedingungen der Temperatur und des pH-Wertes unter Festhalten des Vorformlings in dem kolloidalen Bad, um die Bedingungen für eine Gelbildung mit hoher Konzentration zu schaffen, vorzugsweise durch Einbringen von Salpetersäure in die Lösung derart, daß ein pH-Wert unterhalb von 1 (in der Nähe von

0,7) erreicht wird, wobei die Temperatur in den Bereich von 60°C gebracht wird;
- Wasserentziehung des mit Gel getränkten Vorformlings im Trockenofen;
- Sintern, vorzugsweise in zwei Stufen (1h bei 600°C und 1h bei 900°C).

**Claims**

1. Process for the manufacture of a ceramic-ceramic composite material wherein a fibrous preform is impregnated with a colloidal silica aqueous solution wherein the pH of the silica solution is adjusted to a value below 1 and wherein the temperature and concentration of this solution are adjusted in such a way as to obtain a high concentration gel such that a single impregnation process, followed by drying in the oven is sufficient for 70% of the volume of the composite material to be occupied.

2. Process according to claim 1 wherein the temperature is adjusted to a value in the order of 60°C.

3. Process according to claim 2 wherein the pH is adjusted to a value around 0.7.

4. Process according to claim 2 or 3 wherein the pH is obtained by addition of nitric acid.

5. Process according to one of claim 1 to 4 wherein the preform is kept immersed in the colloidal solution for the duration of gelation.

6. Process according to claim 1 wherein it comprises the following steps:
- preparation of a preform by compacting the fibers, freferably alumina fibers linked by 3 to 4% of silica in such a way as to obtain a preform with an initial porosity of 80 to 90%.
- preparation of a colloidal at 30 to 40% in mass of silica, containing stabilising ions, preferably ammonium.
- impregnation of the preform with the colloidal solution by vacuum, pressure or aspiration impregnation, or by any other equivalent process.
- adjustment of temperature and pH conditions in order to create conditions for high concentration gelation while maintaining the preform in a colloidal bath, preferably introducing nitric acid into the solution so as to obtain a pH below 1 (arouad 0.7), adjusting the temperature to about 60°C.
- dehydration in the oven of the preform impregnated with the gel.
- and sintering, preferably in two steps (1h at 600°C and 1h at 900°C).